# EUROPÄISCHE PATENTSCHRIFT

(11) **EP 0 326 096 B1**
(45) Veröffentlichungstag und Bekanntmachung des Hinweises auf die Patenterteilung: **22.06.1994**
(21) Anmeldenummer: 89101258.5
(22) Anmeldetag: 25.01.1989
(51) Int. Cl.: F16B 21/06, E05B 63/24

(54) **Vorrichtung für das lösbare Verbinden zweier Teile**
Releasable connecting device for two elements
Dispositif d'accouplement relâchable entre deux éléments

(30) Priorität: 25.01.1988 CH 242/88; 16.02.1988 CH 579/88; 29.07.1988 CH 2902/88
(43) Veröffentlichungstag der Anmeldung: 02.08.1989
(73) Patentinhaber: Thöny, Franz, FL-9496 Balzers (LI)
(72) Erfinder: Thöny, Hans-Jörg, FL-9492 Eschen (LI)
(74) Vertreter: Büchel, Kurt F., Dr.

(56) Entgegenhaltungen:
- DE-C- 640 436
- GB-A- 829 531
- GB-A- 1 077 599
- NL-A- 292 941
- US-A- 1 383 209
- US-A- 1 688 272
- US-A- 3 039 802

## Beschreibung

Die Erfindung betrifft eine Vorrichtung für das lösbare Verbinden zweier Möbelteile.

Teile im Sinne der Erfindung sind Bauteile, die einmal miteinander verbunden und dann wieder vollständig voneinander gelöst sein sollen. Darunter fallen beispielsweise Türen und Türrahmen etc.

Dem Anspruch 1 ähnliche Vorrichtungen sind in den unterschiedlichsten Variationen bekannt geworden, beispielsweise als Kofferraum- oder Motorhaubenverschluss, oder als Verbindungselemente für zwei mit fluchtenden Öffnungen versehene Bauteile, wie beispielsweise in der deutschen Offenlegungsschrift 3511070 beschrieben. Bei all diesen bekannten Systemen ist eine Einhandbedienung nur beim Verschliessen der Vorrichtung möglich, beim Lösen ist jedoch zumindest ein zweiter Bewegungsablauf erforderlich, wie beispielsweise das Ziehen an einem Öffnungshebel beim Fahrzeug oder das Drücken eines Zapfens oder dgl. (vergleiche die DE-OS). Das gleiche gilt auch für Schlauchkupplungen z.B. entsprechend der US-A1 383 209.

Es sind auch Vorrichtungen bzw. Möbelbeschläge bekannt, die mit einem Kniehebelmechanismus ausgerüstet sind und so das Öffnen und Schliessen von Türen lediglich durch Druckaufbringung ermöglichen. Diese Vorrichtungen sind jedoch relativ kompliziert in der Herstellung und verfügen über eine Vielzahl von Bauteilen.

Ausserdem gibt es beim Ueberstrecken des Kniehebels ein fallweise stark knacksendes Geräusch, das z.B. im Schlafzimmerbereich als unangenehm empfunden werden kann.

Darüber hinaus kennt man auch Schnappverschlüsse mit einem gefederten Rastelement, zB. Kugelschnapper, die zwar in beide Richtungen einfach zu bedienen sind, in der Öffnungsrichtung jedoch kaum mehr Widerstand bieten als in der Schliessrichtung. Am deutlichsten sind die bekannten Merkmale des Anspruches 1 in der US-A-3,039,802 beschrieben. Zwei mit einer Aufnahme einstückig ausgebildete Federlippen ragen in einem Winkel zueinander von der Aufnahme ab und verriegeln den Verdrängerteil. Beim Entriegeln werden sie durch den Entriegelungsteil gespreizt, so dass ein Herausziehen des Verdrängerteiles und damit ein Entriegeln möglich ist. An den Anschlusstellen der Federlippen zu ihrem Grundteil sind sie geknickt. Es kommt daher dort zu einem Abbiegen, was bei häufiger Benutzung zu Materialschwächung und in der Folge sogar zum Bruch führen kann. Im verriegelten Zustand - bei Zug auf den Schliessbolzen - werden diese Anschlussstellen ebenso belastet.

Schliesslich scheren die freien Enden der Federlippen sowohl am Verdrängerteil als auch an der Entriegelungshülse, wodurch es zu einer Materialabnutzung sowie unerwünschtem Abrieb kommen kann.

Eine Einstellung der Kraft des Riegels ist nur schwer möglich, da bei einer Verstärkung des Materials gleichzeitig die Federkraft erhöht und ein Ver- bzw. Entriegeln erschwert wird. Weitere Probleme können sich aus der Blattfederkonstruktion ergeben, die dem Schliessbolzen entgegengestellt ist. Um über ausreichende Federelastizität zu verfügen, muss nämlich diese Blattfeder relativ lang und daher sperrig sein. Der gesamte Platzbedarf für die bekannte Vorrichtung ist somit erheblich, so dass eine Anwendung z.B. im Möbelbau kaum in Frage kommt. Durch die einseitig befestigte Blattfeder wird ausserdem ein seitlicher Druck auf den Schliessbolzen ausgeübt, der zu einem Verklemmen führen kann. Bei zweiseitig befestigten Blattfedern kann es umgekehrt durch einen geringfügig schief eingeschobenen Schliessbolzen zu einem seitlichen Verdrehkippen der Blattfeder kommen, was sodann deren gewünschte Wirkung verhindert und unter Umständen zu einem unerwünschten Verriegeln zwischen der Blattfeder und dem Verdrängerteil führen kann. Eine solche Verriegelung kann unter Umständen nur durch ein Zerstören des gesamten Verschlusses gelöst werden. Ein Austausch oder ein Justieren der bekannten Blattfeder alleine ist aufgrund deren Verbindung mit dem Basisteil auch nicht möglich. Alle diese Nachteile haben offensichtlich dazu geführt, dass sich die Vorrichtung nach der US'802 in der Praxis nicht durchsetzen konnte.

Die Erfindung stellt sich die Aufgabe, eine Vorrichtung zu schaffen, die in einfacher, platzsparender Bauform mit wenigen Bauteilen herzustellen ist, trotzdem ein sicheres Schliessen, festes Geschlossenhalten und leichtes Lösen erlaubt, einhändig bedient werden kann und eine lange Lebensdauer besitzt. Darüber hinaus sollen die Nachteile der bekannten Vorrichtungen vermieden werden und insbesondere soll die erforderliche Kraft für das Ver- und Entriegeln einstellbar sein.

Diese Aufgabe wird durch die Merkmale des Anspruches 1 gelöst. Die gesamte Vorrichtung besteht erfindungsgemäss somit lediglich aus 6 Bauteilen: Ein Schliessbolzen, ein hülsenförmiger Entriegelungsteil, ein federnder Riegel in Vertikalposition zum Schliessbolzen, ein Gehäuse mit einer konzentrischen Feder, deren Kraft gegen den Schliessbolzen gerichtet ist und einer Einstelleinrichtung. Die zu verbindenden Teile im Sinne des Anspruches 1 sind am Schliessbolzen bzw. am Gehäuse befestigt, so dass beide miteinander verbunden werden können. Die Erfindung schafft somit eine Vorrichtung für das lösbare Verbinden, die einhandbedient, verschliessbar und lösbar ist, wobei beim Lösen der Schliessbolzen und das Gehäuse selbsttätig voneinander distanziert werden. Eine Türe geht beispielsweise nach dem Entriegeln ein Stück selbsttätig auf, wie dies auch bei bekannten Kniehebelsystemen bei Möbelbeschlägen bekannt ist. Die konzentrische Anordnung der Feder vermeidet schiefe Belastungen und stört dadurch die Funktion des Riegels nicht; Materialabnutzungen sind daher nur gering. Die nötige Eindringtiefe ergibt sich aus den Merkmalen des Anspruches 1. Ein Schwenken in der Normalebene ist gemessen am Bekannten, weniger schädlich, da durch das Schwenkgelenk ausschliesslich Schwenkkräfte, nicht aber Verriegelungs- bzw. Haltekräfte aufgenommen werden müssen.

Ein Schliessbolzen im Sinne der Erfindung ist vorzugsweise als Drehteil ausgebildet, jedoch liegen für verschiedene Anwendungsfälle auch beliebig andere Formgebungen im Rahmen der Erfindung liegend. Entscheidend ist beim Schliessbolzen lediglich das Vorhandensein eines Schaftes mit einer bestimmten Längenerstreckung - wie später noch erläutert - für die Lagerung des Entriegelungsteiles oder des Riegels. Ist der Entriegelungsteil am Schaft gelagert, so weist er auch einen Verdrängerteil bzw. eine Verdrängerkontur auf, der bzw. die imstande ist, den Riegel - der dann im Gehäuse gelagert ist - während des Verschliessens in seine Öffnungsstellung zu drücken, um dadurch das Eindringen des Schliessbolzens zu ermöglichen und andererseits mit dem Riegel verriegelbar sein muss, wenn dieser unter Federwirkung wieder in seine Schliessposition zurückgekommen ist. Ist der Riegel am Schaft gelagert, so kann der Verdrängerteil entfallen, wenn gleich eine verjüngte Kontur an seiner Spitze das Schliessen erleichtern kann. Die Kraft, die man zum Ver- oder Entriegeln benötigt, ist unabhängig von der Haltekraft des Riegels. Diese wird einzig durch die Form des Riegel selbst bestimmt. Wird als Riegel beispielsweise eine Falle verwendet, so bestimmt der Querschnitt der Falle die Haltekraft des Riegels. Die Kraft, die man dort zum Ver- oder Entriegeln benötigt, wird hauptsächlich bestimmt durch die Feder, die die Falle in Schliessrichtung drückt. Diese Feder kann willkürlich stark oder schwach gewählt werden, ohne die Haltekraft zu beeinflussen.

Als federnder Riegel sind im Rahmen der Erfindung alle jene einzelnen oder zu Gruppen zusammengefasste Bauteile zu verstehen, die in ihre Schliessrichtung (vertikal auf die Bewegungsrichtung des Schliessbolzens) federnd drückbar sind, die sich durch eine Verdrängerkontur in eine Öffnungsstellung drücken lassen und sodann selbsttätig wieder in ihre Schliesstellung rücken. Sie können, wie erwähnt, im Gehäuse oder am Schliessbolzen montiert sein.

Als hülsenförmiger Entriegelungsteil im Sinne der Erfindung sind alle jene Bauteile zu verstehen, die entweder an der Aussenseite des Schaftes des Schliessbolzens oder an der Innenseite des Gehäuses verschieblich und unverlierbar gelagert sind und eine Verdrängerkontur für das Zurückdrängen des Riegels in dessen Öffnungsstellung aufweisen. Bei der Variante mit dem Riegel am Schliessbolzen ist die Normalerstreckung dieser Verdrängerkontur zur Bewegungsrichtung zumindest gleich gross, vorzugsweise aber grösser als die Verdrängerkontur des Schliessbolzens.

Die durch Anspruch 1 gekennzeichnete Vorrichtung kennt somit 3 Bewegungsarten:
- das Eindrücken des Schliessbolzens in die Eindringtiefe hinter dem Riegel und das dadurch stattfindende Verriegeln mit dem Gehäuse;
- das tiefere Eindringen in die Eindringtiefe des Gehäuses gegen die Kraft der Feder und dadurch das Öffnen oder Aufspreizen des Riegels durch den Entriegelungsteil bzw. durch die Verdrängerkontur des Entriegelungsteiles; und
- das anschliessende Zurückziehen des Schliessbolzens - terstützt durch die Kraft der Feder - in die gelöste Stellung, wobei der Riegel - geführt durch den Entriegelungsteil - sein Gegenlager am Schliessbolzen bzw. im Gehäuse zu überspringen vermag.

Die Ansprüche 5 und 6 kennzeichnen bzw. beschreiben die erfindungsgemässe Ausbildung einer Vorrichtung mit dem Riegel am Schliessbolzen, die dann gewählt wird, wenn der Schliessbolzen möglichst klein und leicht ausgeführt sein soll (z.B. bei Werkzeughalterungen).

Die Rinne stellt sicher, dass der Riegel den Entriegelungsteil beim Zurückziehen bis zum Anschlag mitnimmt, d.h. das zu dem (durch den nach innen gebördelten Gehäuserand gebildeten) Verdrängerteil. Die Verbindung zwischen dem Riegel und dieser Rinne entspricht im wesentliche jener eines herkömmlichen Kugelrastverschlusses. Eine ringförmige Nut am Schliessbolzen elaubt die Verwendung eines relativ billigen Federringes als Riegel, der auch leicht ausgetauscht werden kann, wärend eine Bohrung mit fallenartigem Riegel vor allem bei azylindrischen Schliessbolzen von Vorteil ist. Durch die Rinne ist ein sicheres Schliessen un Öffnen in alle Richtungen auch mit oder gegen die Schwerkraft möglich.

Das Fakultativmerkmal des Anspruches 6 und die in den Kennzeichen des Anspruches 9 beschriebenen Merkmale garantieren ein absolut sicheres Lösen der Vorrichtung, sobald der Entriegelungsteil den Riegel verdrängt hat, wobei die üblicherweise an der Verdrängerkontur des Schliessbolzens vorgesehene Anlaufschräge mit einer Eintrittsschräge des Riegels automatisch zusammenwirkt, so dass der Schliessbolzen aus dem Gehäuse gestossen wird. Ausserdem ist der erforderliche Weg beim Entriegeln am kleinsten. Bei der Ausbildung mit dem Riegel am Schliessbolzen zusammenwirkt beim Öffnen der Riegel mit einer als Verdrängerkontur ausgebildeten Anlaufschräge am als Verdrängerteil wirkenden äusseren Rand des Gehäuses.

Eine besondere Aufgabenstellung ist insbesondere im Bereich der Kindersicherung von Türen wichtig: Selbst wenn Schlösser vorhanden sind, verschaffen sich Kinder in vielen Fällen Schlüssel und damit verbotenen Zugang. Dies gilt es zu verhindern. Diese Aufgabe wird erstmals durch die letzten Merkmale des Anspruches 1 in einfacher Weise gelöst. In Abhängigkeit von der geforderten Kraftüberwindung zum Lösen der Vorrichtung können entsprechend starke Federn vorgesehen werden. Die einstellbaren oder austauschbaren Federn ermöglichen das stetige Anpassen an die vorhandenen Bedingungen (Alter der Kinder), während eine Sperre das dauerhafte Verschliessen ermöglicht. Als Sperre im Sinne der Erfindung sind unelastische Bauteile zu verstehen, die parallel zur Feder eingespannt oder normal zur Bewegungsrichtung des Schliessbolzens angeordnet werden und mit dem Verdrängerteil desselben in Eingriff bringbar sind, um dessen Bewegung zu verhindern oder ein Zurückweichen des Riegels zu verhindern.

Als Federn im Sinne der Erfindung kommt jegliches federnde Material, wie herkömmliche Spiral- oder Gummifedern in Frage.

Weitere Merkmale und Vorteile sind in den Kennzeichen der weiteren Unteransprüche beschrieben.

Die Merkmale des Anspruches 8 gewährleisten eine optimal integrierte Lösung und eine besonders einfache Bauform.

Die Merkmale des Anspruches 3 ermöglichen das einfache und schnelle Verstellen der Vorspannung der Feder, so dass diese bei Bedarf verändert werden kann (Besuch durch fremde Kinder, beispielsweise aber auch Verringerung der Federkraft bei Rekonvaleszenz der Benutzer u.s.w.).

Die Merkmale des Anspruches 9 stellen unterschiedliche Bauvarianten dar, die ebenfalls das sichere Entriegeln garantieren und dabei eine unkomplizierte Formgebung aufweisen. Das willkürlich betätigbare Gestänge kann für jene Sonderfälle zur Anwendung kommen, bei denen das Lösen der Vorrichtung nicht durch Druck direkt auf den Schliessbolzen erfolgen soll.

Das Merkmal des Anspruches 4 stellt eine optimale Bauform für den Einsatz bei Möbeln dar, da für die Vorrichtung nur wenig Platz beansprucht wird.

Anhand von Skizzen wird die Erfindung beispielhaft näher beschrieben. Es zeigen dabei:
- Fig.1: einen Seitenschnitt durch eine erfindungsgemässe Vorrichtung mit einem pilzförmigen Schliessbolzen;
- Fig.2: eine Variante davon mit getrennt steuerbarem Entriegelungsteil;
- Fig.3: eine Variante mit hakenförmigem Schliessbolzen und versenktem Entriegelungsteil;
- Fig.4: eine integrierte Vorrichtung mit Federkrafteinstellung;
- Fig.5: drei verschiedene Federvarianten für eine Vorrichtung gemäss der Fig.1;
- Fig.6: eine Variante einer federkraft-verstellbaren Vorrichtung mit einer Exzenternocke;
- Fig.7: einen Schliessbolzen mit integrierter Feder;
- Fig.8: ein Detail der Fig.3;
- Fig.9: eine einfache, blattförmige, als Riegel ausgebildete Stahlfeder;
- Fig.10 und 11: ein Möbelstück mit erfindungsgemässer Vorrichtung zum Schliessen einmal ohne Tür im Aufriss und einmal mit Tür im Grundriss;
- Fig.12: einen Schnitt durch die Linie XVII-XVII durch die Fig.14;
- Fig.13: eine Türe mit einer anderen Schliessbolzenanbringung;
- Fig.14: eine Ausführung mit federgebremsten Entriegelungsteil;
- Fig.15 bis 21: Ausführungen mit einer Feder als Riegel;
- Fig.22 und 23: Details der Aufnahme für ein Gehäuse einer erfindungsgemässen Vorrichtung;
- Fig.24 und 25: Eine Ausführungsform mit einer Federkraftverstellmöglichkeit von der Seite des Verriegelungsteiles her;
- Fig.26: einen Riegel mit zwei Haltenasen;
- Fig.27: eine Ausführung mit dem Riegel am Schliessbolzen;
- Fig.28 und 29: Details davon und
- Fig.30: eine Variante mit einem fallenartigen Riegel am Schliessbolzen.

Gleiche Teile sind mit gleichem Bezugszeichen versehen, ähnliche Teile mit gleichen Bezugszeichen und unterschiedlichem Index. Die Figuren werden übergreifend und zusammenhängend beschrieben.

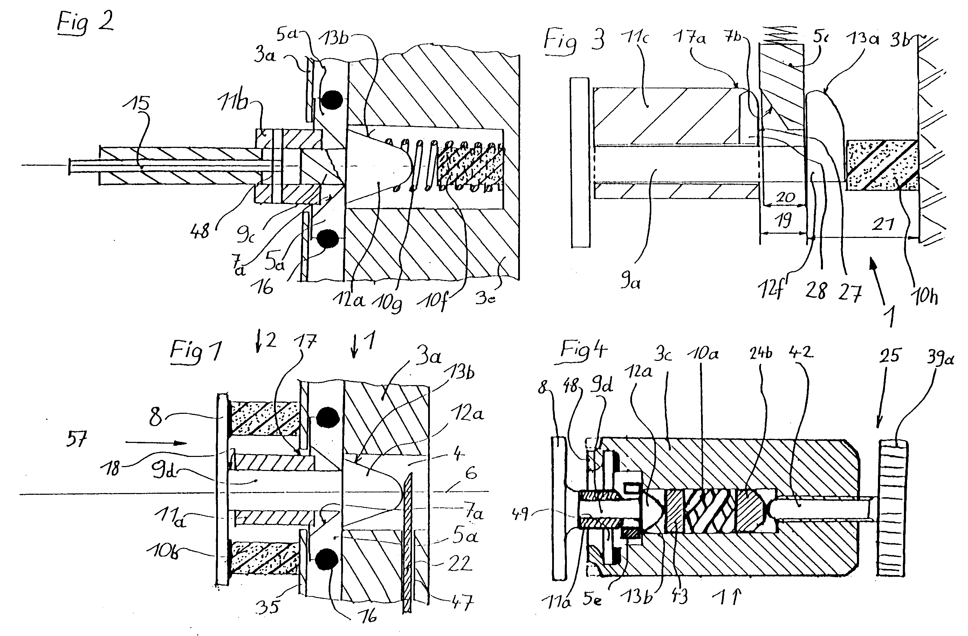

Das Wesen der Erfindung besteht aus einem Aufnahmeteil 1 und einem Verriegelungsteil 2, von denen letzterer einen Schliessbolzen 9 aufweist, der entsprechend den Fig.1, 2, 4, 6, 7, 11, 13, und 15 bis 21 pilzförmig ausgeführt ist und einen zylindrischen Schaft sowie einen - der Kappe des Pilzes entsprechend - kegelig verbreiterten Verdrängerteil 12 aufweist, der gegen die Bewegungsrichtung (Pfeil 57) als Klinke fungiert, wie noch später ausgeführt wird.

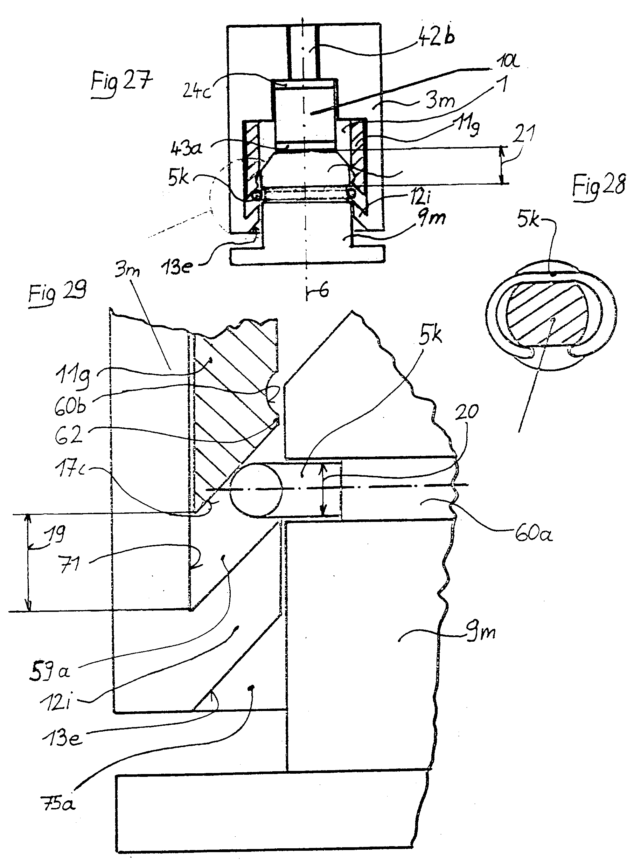

Der Schliessbolzen 9 nach den Figuren 27 bis 30 ist zylinderförmig ohne Pilzkappe, da er keine Verdrängung durchführen muss.

Der Schliessbolzen 9a in den Fig.3 und 8 ist hakenförmig ausgebildet, wobei der abstehende Teil des Hakens den Verdrängerteil 12f bildet.

Der Verdrängerteil 12g in den Fig. 15 bis 21 weist an seiner dem Aufnahmeteil 1 abgewandten Seite eine Ausnehmung 59 für die teilweise Aufnahme eines Entriegelungsteiles 11d - f auf, während die anderen Verdrängerteile 12 in diesem Bereich eine flache Stirnseite in einer Ebene ca 90º auf die Achse 6 des Schliessbolzens 9 aufweisen.

Sämtliche Verdrängerteile 12 verfügen über eine Verdrängerkontur 13, die im wesentlich kegelmantelförmig oder bombiert ausgebildet ist.

Die Verdrängerkontur 13 dient dazu, beim Verbinden der Teile zunächst einen Riegel 5 zurückzudrängen, ihn in Bewegungsrichtung (Pfeil 57) zu überwinden und mit ihm sodann zu verklinken. Die Verdrängerkontur 13e;f und der Verdrängerteil 12i;k befindet sich nicht am Schliessbolzen 9 sondern ist am Gehäuse 2n;m ausgebildet. Die betreffenden Riegel 5k und l werden durch die Konturen 13e und f nach innen gedrückt, während die Riegel 5a-i durch die Konturen 13a-d beim Verriegeln stets nach aussen gedrückt werden.

Die Riegel 5 besitzen analog zu den Schliessbolzen 9 die unterschiedlichsten Ausbildungsvarianten, die im wesentlichen durch die beim Schliessvorgang auftretenden Verdrängungsvorgänge und durch die zu übertragenden Verbindungskräfte zwischen den beiden Teilen bestimmt sind. Die massivste Ausbildung des Riegels ist den Fig.1 und 2 dargestellt. In diesen Fällen besteht der Riegel 5a aus drei identischen, ringsegmentförmigen Elementen, die durch eine Feder, bzw. durch einen Gummiring 16 zentriert und gegen die Achse 6 gedrückt gehalten sind. Infolge der Dehnungselastizität der Feder bzw. des Gummiringes 16 kann der Riegel 5a somit radial auseinander gedrückt werden und ein Passieren des Verdrängerteiles 12a gestatten. Nachdem der Verdrängerteil 12a mit seiner breitesten Stelle (grössten Erstreckung normal auf die Bewegungsrichtung) passiert hat, schliesst der Riegel 5a infolge Federkraft des Gummiringes 16 wieder. Selbstverständlich können anstelle von drei Ringsegmenten auch mehrere oder auch nur zwei vorgesehen sein.

In Fällen, in denen weniger Kräfte übertragen werden müssen, genügen auch einfachere einteilige Riegel 5c, wie sie in den Fig.3, 6 und 8 dargestellt sind. In diesen Fällen ist der Riegel 5c ein Bauteil von trapezförmigem Querschnitt.

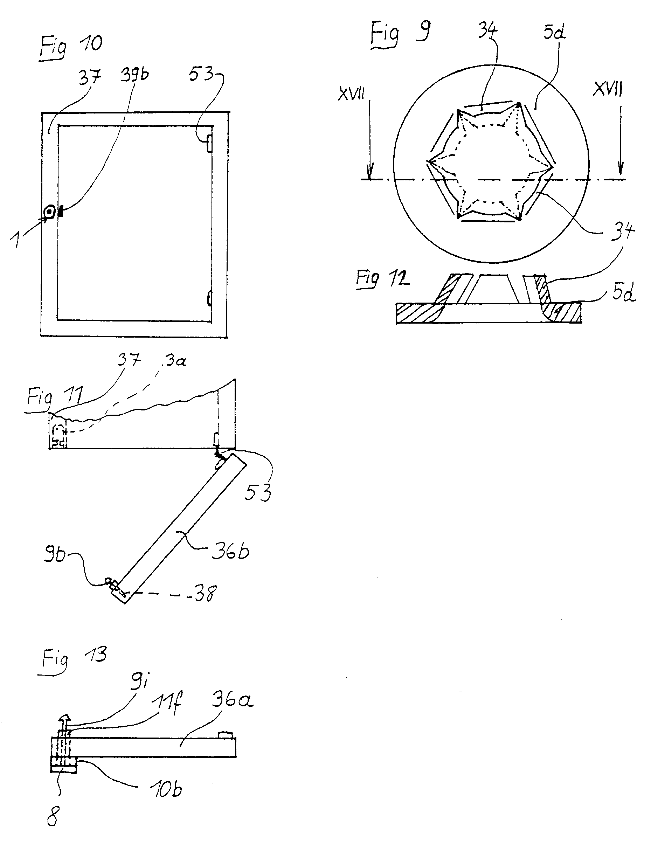

Produktionstechnisch vereinfacht herzustellen und trotzdem mit einem guten Kräfteübertragungsverhältnis sind die Riegel 5d entsprechend den Fig.9 und 12. Die Riegel 5d bestehen im wesentlichen aus einer einstückig ausgebildeten, ringförmigen Blattfeder, die an ihrer Innenseite sternförmig eingeschnitten ist und bei der die eingeschnittenen Segmente 34 in einem Winkel zur flächigen Erstreckung der Blattfeder aufgebogen sind. Die Segmente 34 erlauben durch federndes Zurückweichen ein Passieren des Verdrängerteiles 12 in Bewegungsrichtung. Sobald dieser passiert hat, gehen sie in ihre Ausgangsstellung zurück und verhindern derart ein Lösen der Vorrichtung. Der Riegel 5d ist als separater Bauteil hergestellt und kann in die verschiedensten Konstruktionen eingesetzt werden.

Ein anderer Riegel 5e ist in den Fig.4 dargestellt. Der Riegel 5e besteht aus einem offenen konischen Federring, der sich durch die Verdrängerkontur 13 aufweiten lässt und federnd in seine Ausgangsstellung zurückkehrt.

Die Riegel 5d und 5e haben gegenüber den zuvor beschriebenen Riegeln 5 den Vorteil, dass sie ohne zusätzliche Federelemente federn und einfach in der Herstellung sind.

Sämtliche bisher beschrieben Varianten der Riegel 5 verfügen über eine Eintrittsschräge 7,die ein Verdrängen des Riegels bei Eindrücken des Verdrängerteiles 12 in Schliess- bzw. Bewegungsrichtung erlaubt. Diese Eintrittsschräge 7 und die mit ihr folglich zusammenwirkende Verdrängerkontur 13 sind derart gewählt, dass die Reibung zwischen den beiden Flächen minimal und eine Selbsthemmung verhindert ist.

Die schwächste Ausbildung des Riegels 5h ergibt sich, wenn dieser aus Federdraht gebildet ist und lediglich mit zwei Haltenasen (69) für das Verriegeln sorgt. Allerdings ist eine solche Ausbildung, ebenso wie die Varianten der Riegeln 5f,g, i,k die ebenso aus einem gebogenen Federdraht bestehen am kostengünstigsten, zumal sie selbst sowohl verriegeln als auch federn. Die Eintrittsschräge ist durch die zumeist runde Ausbildung des Drahtquerschnittes gegeben.

Das dritte wesentliche Element für die Erfindung ist ein Entriegelungsteil 11, der an der Aussenseite 18 des Schaftes des Schliessbolzens 9 oder an der Innfläche 71 des Gehäuses 3m,n (Fig.27-30) gleitend angeordnet ist. Die Entrieglungsteile 11a,b, und d bis g entsprechend den Fig.1;4 bzw. 2;7; und 13 und 15 bis 21 sowie 27 bis 30 sind zylindrische Hülsen, während der Entriegelungsteil 11c gemäss den Fig.3 und 8 ein kubischer Körper mit einer Bohrung für den Schaft des Schliessbolzens 9a ist. Ebenso wie der Verdrängerteil 12 verfügen alle Varianten der Entriegelungsteile 11 über eine Verdrängerkontur 17, die im einfachsten Fall entsprechend den Fig.1, 2, 4, 6, 7, 11, 13 und 30 aus einem rechtwinkeligen Zusammenschluss zwischen der dem Verdrängerteil 12 zugewandten Stirnfläche des Entriegelungsteiles 11 und dessen Aussenseite gebildet ist.

Vorzugsweise ist die Verdrängerkontur 17a abgerundet, wie aus den Fig.3 und 8 ersichtlich. Eine scharfe Kante der Verdrängerkontur 17 könnte bei oftmaligem Betätigen die Eintrittsschräge 7 beschädigen. Eine Abrundung verringert die Reibung zwischen der Eintrittsschräge 7 und der Verdrängerkontur 17 und erleichtert somit das Verschliessen der Vorrichtung. Eine Selbsthemmung zwischen der Verdrängerkontur 17 und der Eintrittschräge 7 wird verhindert.

In den Fig.15 bis 21 und 27 bis 29 sind die Verdrängerkonturen 17b;c ähnlich der des Verdrängerteiles 12 kegelig angeschrägt. Die Entriegelungsteile 11d und e verfügen über einen Grat 62 im Anschluss an die Verdrängerkontur 17b bzw. c und über eine daran anschliessende Rinne 60, bzw. 60b deren Rundung vorzugsweise der des Drahtes des Riegels 5g,h bzw. k einspricht. Beim Entriegeln dringt die Verdrängerkontur 17b bzw. c in die Ausnehmung 59 bzw. 59a des Verdrängerteiles 12g bzw. i und nach Überwindung der Breite des Grates 62 der Riegel 5g;h;k kurzfristig in die Rinne 60;60b ein, so dass er beim schliesslichen Oeffnen etwas vorgespannt über den Grat 60 bzw. über den Spalt zwischen dem Verdrängerteil 12g, i und dem Entriegelungsteil 11d,e,g schnellt. Durch diese Ausbildung ist den Federeigenschaften des Riegels 5g,h,k optimal Rechnung getragen. Eine besondere Einlaufschräge ist daran nicht mehr nötig.

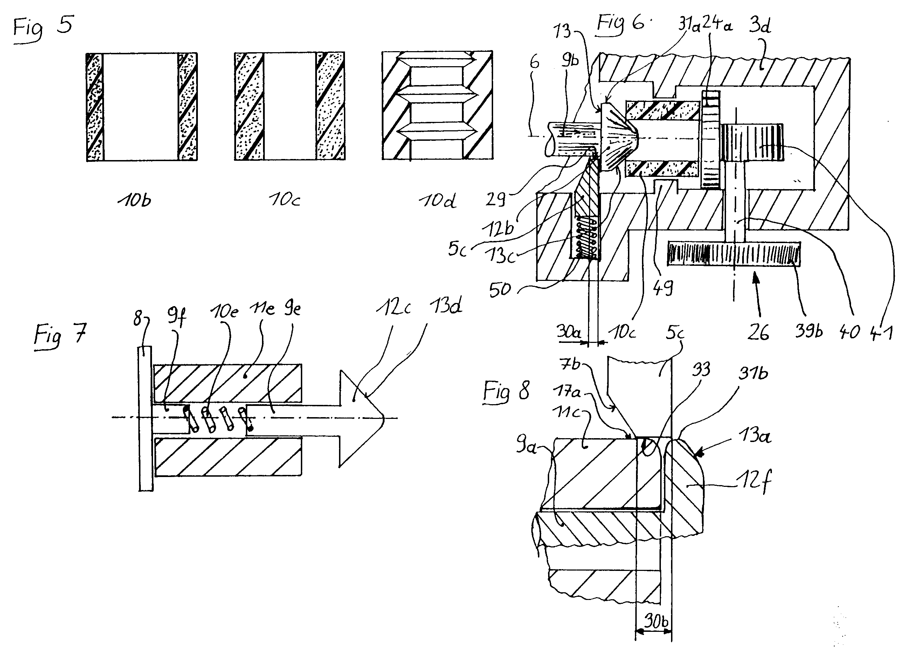

Der Entriegelungsteil 11 wird unabhängig vom Schliessbolzen 9c bzw. 9e (Fig.2 bzw.Fig.7) oder gemeinsam mit dem Schliessbolzen 9 gegen die Einlaufschräge 7 des Riegels 5 gedrückt, so dass dieser so lange radial nach aussen zurückweicht, bis sich die Stelle der grössten Normalerstreckung zur Bewegungsrichtung des Entriegelungsteiles 11 bzw. der Verdrängerkontur 17 an die radial innerste Fläche 29 (Fig.6) des Riegels 5 klemmt. In dieser Stellung ist der Riegel 5 in seiner Lösestellung. Der Schliessbolzen 9, der im Entriegelungsteil 11 gleitet, kann soweit zurückgezogen werden, bis er mit seinem Verdrängerteil 12 die diesem zugewandte Stirnfläche des Entriegelungsteiles 11 erreicht.

Wird nun der Schliessbolzen 9 weiter nach aussen gezogen, so nimmt der Verdrängerteil 12 bzw. der Riegel 5k;i (Fig.27-30) den Entriegelungsteil 11 mit. Bei den Ausführungsbeispielen nach Fig.1-26 zieht der Verdrängerteil 12 den Entriegelungsteil 11 aus der Klemmung des Riegels 5. Bei den Varianten nach Fig. 27-30 blockiert der Verdrängerteil 12i;k das Entfernen des Entriegelungsteiles 11g;h und der Riegel 5k;l wird aus der Klemmung des Teiles 11g;h gezogen sobald der Entriegelungsteil 11 den Riegel 5 verlassen hat, bzw. umgekehrt, übernimmt der Verdängerteil 12 die Klemmkraft des Riegels 5. Da der Verdrängerteil 12 allerdings über seine konische oder bombierte Verdrängerkontur 13 verfügt, rutscht der Riegel 5 - sich weiter in Schliesstellung begebend - in Richtung der Achse 6 und verdrängt somit nun seinerseits den Verdrängerteil 12 und damit den Schliessbolzen 9 in die völlig gelöste Stellung.

Damit dies stets zuverlässig funktioniert, muss die Erstreckung (20) des Riegels 5 in Bewegungsrichtung (Pfeil 57 in Fig.1) höchstens dem Spiel 19 des Entriegelungsteiles 11 in Bewegungsrichtung am Schliessbolzen 9 entsprechen (siehe Fig.3).

Ausserdem darf die Erstreckung 30b des Riegels 5 in Bewegungsrichtung in seinem dem Schliessbolzen 9 nächstliegenden Bereich nicht kleiner sein als der minimale Abstand zwischen der grössten Normalerstreckung (33 in Fig.8) der Verdrängerkontur 17a bzw. des Entriegelungsteiles 11c auf die Bewegungsrichtung und der grössten Normalerstreckung (31b in Fig.8) der Verdrängerkontur 13a bzw. des Verdrängerteiles 12f auf die Bewegungsrichtung.

Schliesslich ist es selbstverständlich erforderlich, dass die zur Bewegungsrichtung normale Erstreckung des Entriegelungsteiles 11 mindestens so gross ist wie die grösste normale Erstreckung des Verdrängerteiles 12. In den Fig.1, 2, 4 sind die Entriegelungsteile 11 mit etwa gleichem Aussendurchmesser wie die Verdrängerteile 12 dargestellt, während der Entriegelungsteil 11c gemäss Fig. 3 und 8 einen geringfügig grösseren Aussendurchmesser als der Verdrängerteil 12f aufweist und an seiner dem Verdrängerteil 12f zugewandten Stirnfläche 27 eine Hinterschneidung 28 aufweist, die geeignet ist, den Verdrängerteil 12f teilweise aufzunehmen. Dadurch kommt es beim Entriegeln durch Einschieben des Entriegelungsteiles 11c gegen die Einlaufschräge 7b des Riegels 5c bzw. nach anschliessendem Verklemmen des Riegels 5c an der Verdrängerkontur 17a zu einem eleganten Entfernen des Schliessbolzens 9a aus seiner verschlossenen bzw. verriegel ten Stellung. Bei einer derartigen Ausbildung kann der Riegel 5c besonders schmal (in Bewegungsrichtung des Schliessbolzens gesehen) ausgebildet sein.

Bei allen Varianten gibt es eine Feder, die beispielhaft in den Fig.1 bis 13, sowie 18,24, 25 und 30 dargestellt ist. Die Feder 10 setzt dem Einschieben des Schliessbolzens 9 oder zumindest aber dem Einschieben des Entriegelungsteiles 11 einen federnden Widerstand entgegen.

In den Fig.1 und 13 ist dabei eine Feder 10b dargestellt, die an einer Druckplatte 8, befestigt ist, die am Schaft des Schliessbolzens 9d angebracht ist und diesen radial überragt. Die Feder 10b ist aus einem hülsenförmigen z.B.: geschäumten Elastomer gebildet und konzentrisch zum Schaft des Schliessbolzens 9d angeordnet. Dabei ist sie an der dem Verdrängerteil 12d zugewandten Stirnfläche der Druckplatte 8 angeklebt.

Die Feder 10b kann bei Bedarf jederzeit durch eine Feder mit anderer Federcharakteristik, aber etwa gleichen Abmessungen (10c, 10d) siehe Fig.5, ersetzt werden. Dadurch können unterschiedlich harte Einstellungen erzielt werden, die Schliessen bzw. Lösen der Vorrichtung erschweren bzw. erleichtern.

An der der Druckplatte 8 abgewandten Seite stützt sich die Feder 10b im verschlossenen Zustand an der Gehäuseaussenwand 35 eines Gehäuses 3a ab, das den Riegel 5a sowie eine Bohrung 4 für den Schliessbolzen 9d bzw. dessen Verdrängerteil 12a aufweist.

In der Variante nach Fig.13 stützt sich die Feder 10b an ihrer von der Druckplatte 8 abgewandten Seite gegen die Umrandung einer Bohrung in einer Türe 36a. In diesem Anwendungsfall ist die Feder sowohl an der Druckplatte 8 als auch an der Türe 36a befestigt, z.B. angeklebt und hält dadurch den Schliessbolzen 9e unverlierbar fest. Die Bohrung in der Türe 36a ist so breit, dass der Entriegelungsteil 11f auch darin aufgenommen ist und in seiner Gleitbewegung auf dem Schaft des Schliessbolzens 9i nicht behindert ist. Die Verschliess- bzw. Lösebewegung wird in der Variante nach Fig.13 somit durch direkten Druck auf die Druckplatte 8 ausgeführt, während in der Variante nach der Fig.1 im Falle eines Türverschlusses die Druckplatte 8 an der Innenseite einer Tür befestigt oder integriert ist und das Verschliessen bzw. Lösen somit durch Druck auf die Tür selbst erfolgt. Eine solche Variante ist in Fig.11 an der Türe 36b angedeutet.

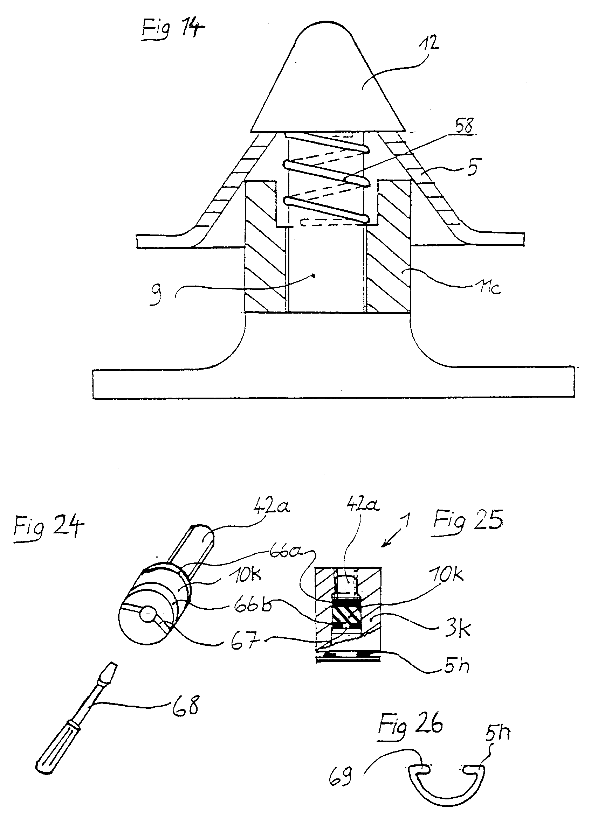

Das Gehäuse 3a ist im Fall der Fig.10 und 11 im Türstock 37 integriert. Eine umgekehrte Ausbildung, bei der der Schliessbolzen am Türstock befestigt und das Gehäuse in der Tür aufgenommen ist, ist in besonderen Fällen selbstverständlich auch möglich. In beiden Fällen kann unter Umständen auf eine Druckplatte 8 verzichtet werden, wenn das dem Verdrängerteil 12 abgewandte Ende 38 des Schaftes 9b beispielsweise als Schraube ausgebildet ist, wie in der Fig. 11 angedeutet. In einem solchen Fall ist allerdings auch die Befestigung einer hülsenförmigen Feder 10b ungünstig, so dass eine der im folgenden beschriebenen Federvarianten zur Anwendung gelangt.

In den Fig.2 bis 4, 6, 10, 11, 17, 27 und 30 ist die Federkraft durch eine im Inneren des Gehäuses 3 liegende Feder 10 gebildet, die als Schraubenfeder (10a in Fig.4; 10g in Fig.2), hülsenförmige Schaumstoffeder (10c in Fig.6) oder blockförmige Schaumstoffeder (10h;l in Fig.3;27;30) ausgebildet ist. In Fig.2 ist ausserdem eine zylindrische Schaumstoffeder 10f dargestellt, die zur Verstärkung der Federkraft der Spiralfeder 10g in diese eingesetzt ist.

Sämtliche Federn 10 können austauschbar, oder wie in Fig.2 ersichtlich, verstärkbar sein. In den Fig.4, 6 und 17 sind jedoch bevorzugte Varianten dargestellt, bei denen die Federkraft durch eine Einstellschraube 25 bzw. einen Einstellexzenter 26 verstellbar ist.

Die Verstellung erfolgt durch Drehen an einem Einstellknopf 39, der über eine Welle 40 mit einem Exzenternocken 41 verbunden (Fig.6), oder als Schraube 42 ausgebildet und im Gehäuse 3c in einem Gewinde eingeschraubt ist. Sowohl der Exzenternocken 41 als auch die Schraube 42 beaufschlagen ein Widerlager 24a;b;c für die Feder 10c;a;l. In Fig.4;27 ist ein weiteres Widerlager 43;43a dargestellt, das an dem dem Widerlager 24b;c abgewandten Ende der Feder 10a;l vorgesehen ist und den Übergang zwischen dem Verdrängerteil 12a bzw. dem Schliessbolzen und der Feder 10a;l bildet.

Eine andere Verstellung der Federkraft ergibt sich besonders vorteilhaft in der Ausgestaltung nach Fig. 24 und 25, da sie dort mittels Schraubenzieher 68 von der Seite des Verriegelungsteiles 2 her vorgenommen werden kann. Eine Schraube 42a trägt dabei eine Gummiverbundscheibe 66a aus Metall, an der die Feder 10k aus Gummi angeklebt ist. Am anderen Ende der Feder 10k klebt ebenso eine Gummiverbundscheibe 66b, in der ein Schraubenschlitz 67 oder ein Kreuzlochschlitz ausgebildet ist. Die Schraube 42a ist in einem Gewinde im Gehäuse 3k verstellbar eingeschraubt.

In der Fig.7 ist eine Variante dargestellt, bei der der Schliessbolzen in zwei Teile 9e und 9f geteilt ist. Die Teile des Schliessbolzens 9e und 9f sind an ihren Trennstellen mit einer Feder 10e unlösbar verbunden. Der Entriegelungsteil 11e überbrückt beide Teile 9e und 9f. Der Teil 9e, der den Verdrängerteil 12c trägt, ist somit unverlierbar mit dem Teil 9f verbunden, der seinerseits die Druckplatte 8 trägt. Beim Lösen der Vorrichtung wird die Druckplatte 8, wie schon weiter oben beschrieben, mit Druck beaufschlagt, worauf sich gegen die Kraft der Feder 10e der Abstand zwischen den beiden Teilen 9e und 9f verringert, so dass der Entriegelungsteil 11e gegen die nicht dargestellte Eintrittsschräge des Riegels geschoben wird.

Sämtliche in den Fig.1-26 dargestellten Gehäuse 3 verfügen über geeignete Aufnehmungen für das Aufnehmen des Riegels 5 sowie für das Aufnehmen des Schliessbolzens 9, wobei dafür eine Eindringtiefe 21 erforderlich ist, die mindestens der Längserstreckung des Verdrängerteiles 12f und dem Spiel 19 des Entriegelungsteiles 11c am Schliessbolzen 9a entsprechen muss (siehe Fig.3).

Nun zu den weitern Details in den Ausführungsformen: Die Variante nach Fig.1 weist in ihrem Gehäuse 3a einen von der Achse 6 radial nach aussen ragenden Schlitz 47 auf, der eine schiebbare Sperre 22 mit etwa rechteckigem Querschnitt aufnimmt, mit deren Hilfe die Eindringbewegung des Schliessbolzens 9 verhindert werden kann. Die Sperre 22 könnte auch mit einem nicht dargestellten Schloss verbunden sein, so dass nur über einen geeigneten Schlüssel verfügende Personen Zugang haben. Eine andere Sperre könnte auch parallel zur Feder 10b vorgesehen sein.

In der Variante nach Fig.2 ist der Entriegelungsteil 11b mit einem Gestänge 15 verbunden, das in einer Bohrung des Schaftes des Schliessbolzens 9c axial zu diesem geführt ist. Im Bereich des Entriegelungsteiles 11b verfügt der Schliessbolzen 9c über einen Schlitz 48, in dem zwei radial nach aussen ragende Teile des Gestänges 15 in Bewegungsrichtung verschiebbar sind. Diese nach aussen ragenden Teile des Gestänges 15 sind mit dem Entriegelungsteil 11 starr verbunden. Ein Druck in Bewegungsrichtung (Pfeil 57) auf das Gestänge 15 bewirkt somit ein Verschieben des Entriegelungsteiles 11b gegen die Eintrittsschräge 7a des Riegels 5a und damit ein Lösen der Verriegelung. Diese Variante kann überall dort vorgesehen sein, wo es zu ungewünschtem Drücken auf den Schliessbolzen kommen kann, so dass auch unbeabsichtigte Lösungen stattfinden könnten. In diesem Fall ist allerdings eine Zweihand-Bedienung erforderlich.

Das Gehäuse 3c gemäss der Variante nach Fig.4 ist ein Pressteil, der an seinem der Druckplatte 8 zugewandten Ende über einen Rand 48 verfügt, der bei der Montage des Aufnahmeteiles 1, das heisst bei dem Einbau sämtlicher Teile in das Gehäuse 3c nach innen verpresst wird. Der ursprüngliche Zustand ist strichpunktiert dargestellt. Durch dar Nach-Innen-Verpressen des Randes 48 wird eine Scheibe 49 gegen den als Riegel 5e ausgebildeten Federring gedrückt, so dass dieser dauerhaft und unverlierbar im Gehäuse 3c fixiert ist. Der Ring hat zwar ein vertikales Spiel, das jedoch infolge der Verdrängerkonturen 13, 17 nicht störend wirkt.

Für den Einbau eines Aufnahmeteiles 1 bzw. des Gehäuses 3 in eine Türe oder einen Türstock kann am Umfang des Gehäuses 3c auch ein Gewinde vorgesehen sein, so dass das Gehäuse eingeschraubt werden kann.

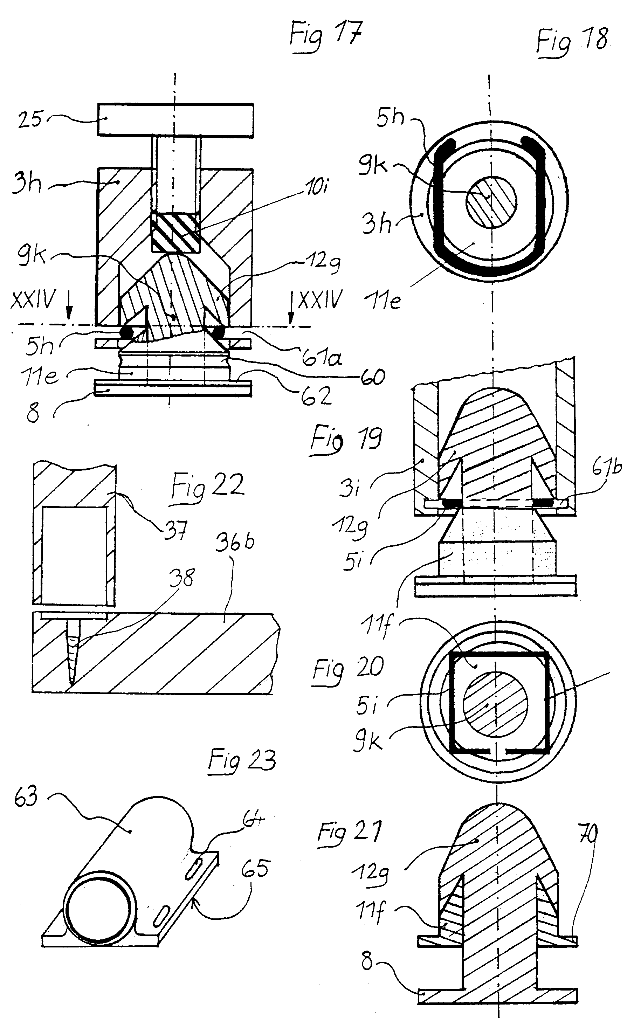

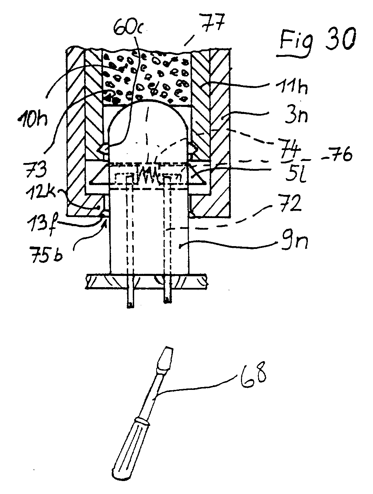

Siehe dazu auch die Fig. 22 mit dem Türstock 37 und einer Tür 36b, in der eine Sacklochbohrung für das Ende 38 eines Verriegelungsteiles 2 vorgesehen ist. Kann der Aufnahmeteil 1 nicht in den Türstock eingesetzt werden, ist eine Aufnahmehülse 63 nach Fig. 29 vorgesehen, die an ihrer Basisfläche 65 Langlöcher 64 für das Verschrauben mit einem Türstock o.d.gl. aufweist. In eine solche Aufnahmehülse 63 können beliebige Aufnahmestücke 1 eingesetzt, vorzugsweise eingeschraubt werden. Optimal eignet sich dafür ein Aufnahmeteil 1 nach Fig. 25.

Die Federn 10b bis 10d gemäss Fig.5 sind aus dem gleichen Material und unterschiedlich stark (10b und 10c), bzw. aus einem nicht geschäumten Elastomer, das zur Steuerung der Federcharakteristik keilförmige Aufnahmeringe aufweist (10d).

Die Feder 10c in der Variante nach Fig.6 ist im Gehäuse 3d durch Halteschultern 49 koaxial zur Achse 6 des Schliessbolzens 9b gehalten. Der Riegel 5c ist durch eine bekannte und nicht näher dargestellte Massnahme im Gehäuse 3d unverlierbar gehalten, so dass er nach dem Entfernen des Schliessbolzens 9b nicht verloren wird. In Richtung zur Achse 6 wird er durch eine Spiralfeder 50 gedrückt gehalten. Die Verdrängerkonturen 13c und 13d des Verdrängerteiles 12b und 12c in den Fig.6 und 7 sind im Gegensatz zu den anderen Verdrängerkonturen rein kegelig ausgebildet.

Die Fig.10 und 11 zeigen schematisch dargestellte Scharniere 53 zur Lagerung einer Türe 36. Ein Verstellmechanismus entsprechend der Fig.6 ist durch den Drehknopf 39b angedeutet. Der Aufnahmeteil 1 besteht aus dem Gehäuse 3 und dem Riegel 5 und ist im Türstock 37 versenkt.

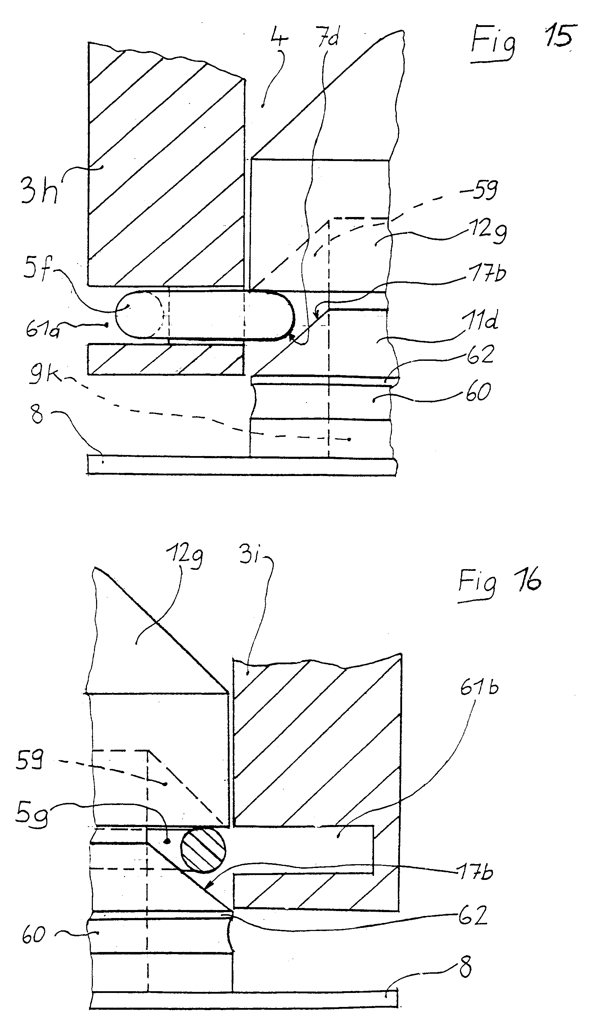

Der Entriegelungsteil 11c gemäss Fig. 14 zeigt eine Zusatzfeder 58, die zwischen dem Verdrängerteil 12 und dem Entriegelungsteil 11c eingespannt ist. Diese Zusatzfeder 58 stellt somit die Ausgangslage des Entriegelungsteiles 11c sicher. Der Entriegelungsteil 11c befindet sich so grundsätzlich in der dem Verdrängerteil 12 abgewandten Position und wird erst durch Ausüben des gewünschten Lösedruckes auf den Schliessbolzen 9 gegen den Riegel 5 gepresst. Zur besseren Führung der Zusatzfeder 58 verfügt der Entriegelungsteil 11c über eine dem Entriegelungsbolzen 9 zugewandte konzentrische Hinterschneidung, die die Zusatzfeder 58 aufnimmt.

Das Gehäuse 3h gemäss Fig.15 verfügt über eine Nut 61 a an seiner Aussenseite, welche den Riegel 5f unverlierbar hält. Der Riegel 5f könnte dabei ähnlich dem Riegel 5h nach Fig. 18 ausgebildet sein.

Das Gehäuse 3i gemäss Fig. 16 verfügt über eine Nut 61b an seiner Innenseite. Der Riegel 5g ragt an zuminest zwei Stel len in diese Nut 61b und ist dort somit unverlierbar gehalten. Die übrigen Stellen der Nut 61b dienen als Ausweiche beim Ver- bzw. Entriegeln.

Durch die dargestellten Figuren und durch die Beschreibung ist die Erfindung nicht eingeschränkt. So können beispielsweise anstelle der Gummifeder 16 auch ringförmige Spiralfedern vorgesehen sein. Für besondere Anwendungsfälle könnten die Riegel 5 selbst aus elastischem Material ausgebildet sein, so dass sie das Eindringen eines Schliessbolzens bzw. ihr Lösen durch den Entriegelungsteil 11 gestatten.

Der begrenzende Teil des Gehäuses 3i neben der Nut 61b könnte auch durch Umbördeln des Randes eventuell nach Beilage einer Beilagscheibe zur Sicherung der Bewegungsfreiheit des Riegels 5g erfolgen.

Die zu allen bisher beschriebenen Beispielen unterschiedliche Ausbildung der Vorrichtungen der Fig.27-30 sind, wie schon erwähnt, technische Umkehrlösungen des in den Fig.1-26 beschriebenen Prinzips. Die Riegel 5k bzw. 5l sind am Schliessbolzen 9m bzw. 9n in einer Rinne 60a bzw. in einer Bohrung 74 gehalten. Diese Riegel 5k;l verriegeln in ihrer Schliessstellung mit einem Verdrängerteil 12i;k, der am Gehäuse 3m;n ausgebildet ist. Die Funktionsweise und Verschlusshaltefestigkeit ist im wesentlichen identisch zu den übrigen Varianten. Die dargestellten Riegel 5k,l sind nur beispielhaft beschrieben und könnten durch beliebige andere, wie beispielsweise Blattfedern, Rastnocken, Rastkugeln o.dgl. gebildet sein.

In der Fig.30 ist ersichtlich, wie fallenartige Riegel 5l gegen Verlieren gesichert sein können: Die Verliersicherung 72 weist im wesentlichen für jeden fallenartigen Riegel 5l einen Gewindebolzen auf, der in den Schliessbolzen 9m, beispielsweise mittels Schraubenzieher 68 eindrehbar ist und eine Länge besitzt, mit der er in die Bohrung 74 bzw. in eine schlitzförmige Ausnehmung 76 des Riegels 5l eingreift. Der Riegel 5l ist zwar durch eine Feder 77 in Schliessrichtung und damit nach aussen beaufschlagt, wird jedoch durch den Gewindebolzen an einem völligen Herausfallen aus der Bohrung 74 gehindert. Der Riegel 5l verfügt über eine fallenartige Auflaufschräge, so dass der Entriegelungsteil 11h an seiner Stirnseite nicht angeschrägt sein muss. Eine Rinne 60c an der inneren Mantelfläche 73 des Entriegelungsteiles 11h dient auch hier zum Verspannen des Riegels 5l, damit dieser, bzw. der Schliessbolzen 9n den Entriegelungsteil 11h gegen den Verdrängerteil 12k ziehen kann.

## Patentansprüche

1. Möbelverbindung für zwei relativ zueinander bewegbare Möbelteile mit einer Vorrichtung für das lösbare Verbinden der Möbelteile, die eine Verdrängerkontur (13), ein Verdrängerteil (12), einen gegen ein sich einenends an einer Widerlagerfläche (24; 43) innerhalb eines Gehäuses (3) abstützendes Federelement (10) wirkenden Schliessbolzen (9), einen federnden, in Schliessstellung gedrückten Riegel (5), ein für das Zusammenwirken mit dem Riegel (5) ausgebildetes Gegenlager an Schließbolzen (9) und ein hülsenförmiges, verschieblich und unverlierbar mit Spiel gelagertes, gegebenenfalls unabhängig vom Schliessbolzen (9) betätigbares, Entriegelungsteil (11) für das Öffnen des Riegels (5) aufweist, wobei die minimale Eindringtiefe des Schliessbolzens (9) in ein Aufnahmeteil (1) der Erstreckung des Verdrängerteiles (12) in Bewegungsrichtung des Schliessbolzens (9) entspricht und der Riegel (5) von einer Federkraft in einer Normalebene auf die Bewegungsrichtung von Schliessbolzen (9) bzw. Aufnahmeteil (1) aufeinander zu bzw. auseinander schwenkfrei verschieblich gehalten ist, wobei das Gehäuse (3) und der Schliessbolzen (9) je an einem der Möbelteile (8; 36, 37) befestigbar sind, und wobei zum automatischen Lösen der beiden Möbelteile nach dem Entriegeln eine Einstelleinrichtung (25; 26) für die Kraft des gegen den Schliessbolzen (9) wirkenden Federelementes (10) vorgesehen ist.

2. Möbelverbindung nach Anspruch 1, dadurch gekennzeichnet, dass die Einstelleinrichtung (25; 26) mit der Widerlagerfläche (24; 43) für das Federelement (10) zu deren Positionseinstellung in Bewegungsrichtung verbunden ist und vorzugsweise eine Handhabe (39) trägt.

3. Möbelverbindung nach Anspruch 1 oder 2, dadurch gekennzeichnet, dass die Einstelleinrichtung eine Schraube (25; 42) oder einen Einstellexzenter (26) aufweist, wobei die Schraube (42a) gegebenenfalls von der Seite des Federelementes (10k) her bedienbar ist.

4. Möbelverbindung nach einem der vorhergehenden Ansprüche, dadurch gekennzeichnet, dass das Federelement (10) in an sich bekannter Weise konzentrisch zur Achse (6) des Schliessbolzens (9) bzw. des Verdrängerteiles (12) angeordnet ist.

5. Möbelverbindung nach Anspruch 4, dadurch gekennzeichnet, dass der Schliessbolzen (9m;n) eine zumindest teilweise ringförmige Rinne (60a) oder eine Bohrung (74) für die Aufnahme des Riegels (5k oder l) aufweist, wobei der Riegel im ersten Fall als Federring (5k) und im zweiten Fall als - zumindest eine - federbeaufschlagte Falle (5l) mit einer Verliersicherung (72) ausgebildet ist. (Fig.34-36)

6. Möbelverbindung nach Anspruch 5, dadurch gekennzeichnet, dass der Riegel (5k; 5l) am Schliessbolzen gehalten ist und die Rinne (60a) an einer inneren Mantelfläche (73) des Entriegelungsteiles (11) angeordnet ist, und dass der dem Schliessbolzen (9m; 9n) im geöffneten Zustande zugewandte Rand des Gehäuses (3m; 3n) nach innen zu umgebördelt ist und den Verdrängerteil (12i; 12k) bildet, so dass die verbleibende Durchtrittsöffnung kleiner ist als der Durchmesser des Entriegelungsteiles (11f) bzw. als die Breite des Riegels (5k; 5l) im geöffneten Zustand, und dass vorzugsweise der Verdrängerteil (12g; 12i) hinterschnitten ist und eine Ausnehmung (59; 59a) für die Verdrängerkontur (17b; 17c) des Entriegelungsteiles (11d-g) aufweist.

7. Möbelverbindung nach einem der vorhergehenden Ansprüche, dadurch gekennzeichnet, dass der Schliessbolzen (9) an seinem dem Verdrängerteil (12) abgewandten Ende eine die Erstreckung des Entriegelungsteiles (11) normal auf die Bewegungsrichtung überragende Druckplatte (8) aufweist, und dass das - gegebenenfalls hülsenförmig ausgebildete - Federelement (10b-d) im verschlossenen Zustande zwischen dem Gehäuse (3a) und der Druckplatte (8) angeordnet ist (Fig.1; 18).

8. Möbelverbindung nach einem der vorhergehenden Ansprüche, dadurch gekennzeichnet, dass das Federelement (10a; 10c; 10f-l) an der im gelösten Zustande dem Schliessbolzen (9) abgewandten Seite des Riegels (5) angeordnet ist und insbesondere aus einem elastischen Material besteht.

9. Möbelverbindung nach einem der vorhergehenden Ansprüche, dadurch gekennzeichnet, dass der Riegel (5c) an seiner der Achse (6) des Schliessbolzens (9b) zunächstliegenden Fläche (29) in Bewegungsrichtung eine Erstreckung (30a) aufweist, die etwa - in Längsrichtung des Schliessbolzens (9b) gesehen - der Erstreckung der Verdrängerkontur (13) des Schliessbolzens (9b) an deren grösster Aufweitung (31a) entspricht (Fig.6).

## Claims

1. Furniture connector for two furniture parts displaceable relative to one another, having an apparatus for detachably connecting the furniture parts, which has a displacement contour (13), a displacement part (12), a locking bolt (9) acting against a spring element (10) supported at one end on an abutment surface (24; 43) inside a housing (3), a spring-loaded lock (5) depressed in the closing position, a support on the locking bolt (9), which support is formed for cooperation with the lock (5), and a sleeve-like release part (11) for opening the lock (5), which release part is mounted displaceably and with play and in such a way that it cannot be lost and may be operated independently of the locking bolt (9), the minimum depth of penetration of the locking bolt (9) into a receiving part (1) corresponding to the length of the displacement part (12) in the direction of movement of the locking bolt (9) and the lock (5) being held by a spring force, so that it is displaceable without swinging, in a plane normal to the direction of movement of the locking bolt (9) and receiving part (1) towards one another or apart, and the housing (3) and the locking bolt (9) each being capable of being fastened to one of the furniture parts (8; 36, 37), and an adjusting means (25; 26) for the force of the spring element (10) acting against the locking bolt (9) being provided for automatic detachment of the two furniture parts after the release.

2. Furniture connector according to Claim 1, characterized in that the adjusting means (25; 26) is connected to the abutment surface (24; 43) for the spring element (10) for adjusting its position in the direction of movement and preferably carries a handle (39).

3. Furniture connector as claimed in Claim 1 or 2, characterized in that the adjusting means has a screw (25; 42) or an adjusting cam (26), the screw (42a) optionally being capable of being operated from the spring element (10k) side.

4. Furniture connector according to any of the preceding Claims, characterized in that the spring element (10) is arranged, in a manner known per se, concentrically with the axis (6) of the locking bolt (9) or of the displacement part (12).

5. Furniture connector according to Claim 4, characterized in that the locking bolt (9m; n) has an at least partly annular channel (60a) or a bore (74) for receiving the lock (5k or l), the lock being, in the first case, in the form of a spring washer (5k) and, in the second case, in the form of - at least one - spring-loaded catch (5l) having a securing means (72) to prevent loss. (Fig. 34-36)

6. Furniture connector according to Claim 5, characterized in that the lock (5k; 5l) is held on the locking bolt, and the channel (60a) is arranged in an inner lateral surface (73) of the release part (11), and that the edge of the housing (3m; 3n) which faces the locking bolt (9m; 9n) in the opened state is beaded towards the inside and the displacement part (12i; 12k) is formed in such a way that the remaining orifice is smaller than the diameter of the release part (11f) or than the width of the lock (5k; 5l) in the opened state, and that, preferably, the displacement part (12g; 12i) is undercut and has a recess (59; 59a) for the displacement contour (17b; 17c) of the release part (11d-g).

7. Furniture connector according to any of the preceding Claims, characterized in that the locking bolt (9) has, at its end opposite to the displacement part (12), a pressure plate (8) projecting beyond the length of the release part (11), perpendicular to the direction of movement, and that the - optionally sleeve-like - spring element (10b-d) is arranged between the housing (3a) and the pressure plate (8) in the closed state (Fig. 1; 18).

8. Furniture connector according to any of the preceding Claims, characterized in that the spring element (10a; 10c; 10f-l) is arranged on the opposite side of the lock (5) to the locking bolt (9) in the released state and in particular consists of an elastic material.

9. Furniture connector according to any of the preceding Claims, characterized in that the lock (5c) has, on its surface (29) adjacent to the axis (6) of the locking bolt (9b), in the direction of movement, an extension (30a) which - viewed in the longitudinal direction of the locking bolt (9b) - approximately corresponds to the length of the displacement contour (13) of the locking bolt (9b) at its greatest opening (31a) (Fig. 6).

## Revendications

1. Liaison pour deux parties de meuble mobiles l'une par rapport à l'autre, comprenant un dispositif pour relier les parties de meuble d'une manière amovible, lequel comporte un contour de refoulement (13), une pièce de refoulement (12), un goujon de fermeture (9) agissant sur un élément élastique (10) qui s'appuie à une extrémité sur une surface de contre-appui (24 ; 43) à l'intérieur d'un logement (3), un verrou élastique (5) rappelé vers la position de fermeture, un contre-appui qui est ménagé sur le goujon de fermeture (9) et qui est conformé en vue de sa coopération avec le verrou (5), et une pièce de déverrouillage en forme de manchon (11) qui est destinée à l'ouverture du verrou (5), qui est montée avec un jeu de manière coulissante et imperdable et qui peut être actionnée le cas échéant indépendamment du goujon de fermeture (9), cependant que la profondeur de pénétration minimale du goujon de fermeture (9) dans une pièce réceptrice (1) correspond à l'étendue de la pièce de refoulement (12) dans la direction de déplacement du goujon de fermeture (9), que le verrou (5) est maintenu par une force élastique en pouvant se déplacer sans pivoter dans un plan perpendiculaire à la direction de déplacement du goujon de fermeture (9) ou de la pièce réceptrice (1), respectivement, en s'ouvrant ou en se fermant, respectivement, que le logement (3) et le goujon de fermeture (9) peuvent être fixés chacun à l'une des parties de meuble (8 ; 36, 37), et qu'en vue de séparer automatiquement les deux parties de meuble après le déverrouillage, il est prévu un dispositif (25 ; 26) pour régler la force de l'élément élastique (10) qui agit sur le goujon de fermeture (9).

2. Liaison pour meuble selon la revendication 1, caractérisée par le fait que le dispositif de réglage (25 ; 26) est relié à la surface de contre-appui (24 ; 43) qui est destinée à l'élément élastique (10) en vue du réglage de la position de celle-ci dans la direction de déplacement, et qu'il porte de préférence un organe de manoeuvre (39).

3. Liaison pour meuble selon la revendication 1 ou 2, caractérisée par le fait que le dispositif de réglage comporte une vis (25 ; 42) ou un excentrique de réglage (26), la vis (42a) pouvant être actionnée, le cas échéant, depuis le côté de l'élément élastique (10k).

4. Liaison pour meuble selon l'une des revendications précédentes, caractérisée par le fait que l'élément élastique (10), d'une manière connue en elle-même, est disposé concentriquement par rapport à l'axe (6) du goujon de fermeture (9) ou de la pièce de refoulement (12), respectivement.

5. Liaison pour meuble selon la revendication 4, caractérisée par le fait que le goujon de fermeture (9m, n) comporte une gorge (60a), du moins partiellement annulaire, ou un perçage (74) pour recevoir le verrou (5k ou l), cependant que, dans le premier cas, le verrou est réalisé sous la forme d'une bague élastique (5k) et que, dans le second cas, il l'est sous la forme d'au moins un pêne (5l) qui est soumis à l'action d'un ressort et qui est pourvu d'un organe (72) empêchant sa perte (figures 27 à 30).

6. Liaison pour meuble selon la revendication 5, caractérisée par le fait que le verrou (5k ; 5l) est maintenu sur le goujon de fermeture, et que la gorge (60c) est ménagée sur une surface latérale intérieure (73) de la pièce de déverrouillage (11), par le fait que le bord du logement (3m; 3n) qui est tourné vers le goujon de fermeture (9m ; 9n) à l'état ouvert est rabattu vers l'intérieur pour former la pièce de refoulement (12i ; 12k), de sorte que l'ouverture de passage qui reste est plus petite que le diamètre de la pièce de déverrouillage (11f) ou, respectivement, que la largeur du verrou (5k ; 5l) à l'état ouvert, et par le fait que, de préférence, la pièce de refoulement (12g ; 12i) est en contre-dépouille, et qu'elle présente un évidement (59 ; 59a) destiné au contour de refoulement (17b ; 17c) de la pièce de déverrouillage (11 d à g).

7. Liaison pour meuble selon l'une des revendications précédentes, caractérisée par le fait que le goujon de fermeture (9) comporte, à son extrémité qui est opposée à la pièce de refoulement (12), une plaque de pression (8) qui fait saillie au-delà de l'étendue de la pièce de déverrouillage (11), perpendiculairement à la direction de déplacement, et par le fait que l'élément élastique (10 b à d) - réalisé en forme de manchon, le cas échéant - est disposé à l'état fermé entre le logement (3a) et la plaque de pression (8) (figures 1 ; 13).

8. Liaison pour meuble selon l'une des revendications précédentes, caractérisée par le fait que l'élément élastique (10a ; 10c ; 10 f à l) est disposé sur le côté du verrou (5) qui est opposé au goujon de fermeture (9) à l'état de déverrouillage, et qu'il est constitué en particulier par un matériau élestique.

9. Liaison pour meuble selon l'une des revendications précédentes, caractérisée par le fait que le verrou (5c) présente, sur sa surface (29) qui est la plus proche de l'axe (6) du goujon de fermeture (9b), une étendue (30a) dans la direction de déplacement qui correspond à peu près - vue dans la direction longitudinale du goujon de fermeture (9b) - à l'étendue du contour de refoulement (13) du goujon de fermeture (9b) à l'endroit (31a) où il est le plus élargi (figure 6).
